# EUROPÄISCHE PATENTSCHRIFT

(11) **EP 1 940 951 B1**
(45) Veröffentlichungstag und Bekanntmachung des Hinweises auf die Patenterteilung: **11.12.2013**
(21) Anmeldenummer: 06806521.8
(22) Anmeldetag: 25.10.2006
(51) Int. Cl.: C08L 51/08, C09D 151/08, C08F 283/00, C08K 3/00

(54) **PHYSIKALISCH, THERMISCH ODER THERMISCH UND MIT AKTINISCHER STRAHLUNG HÄRTBARE, WÄSSRIGE GEMISCHE**
AQUEOUS MIXTURES CURABLE PHYSICALLY, THERMALLY OR THERMALLY AND WITH ACTINIC RADIATION
MELANGES AQUEUX, DURCISSABLES PHYSIQUEMENT, THERMIQUEMENT OU THERMIQUEMENT ET PAR RAYONNEMENTS ACTINIQUES

(30) Priorität: 26.10.2005 DE 102005051238
(43) Veröffentlichungstag der Anmeldung: 09.07.2008
(73) Patentinhaber: BASF Coatings GmbH, 48165 Münster (DE)
(72) Erfinder: STEINMETZ, Bernhard, 97535 Rütschenhausen (DE); JANSING, Frank, 97941 Tauberbischofsheim (DE); LÜER, Ingo, 97276 Margetshöchheim (DE); LÖW, Norbert, 90491 Nürnberg (DE)
(74) Vertreter: Leifert & Steffan
(86) Internationale Anmeldenummer: PCT/EP2006/010266
(87) Internationale Veröffentlichungsnummer: WO 2007/048587

(56) Entgegenhaltungen:
- EP-A- 1 318 525
- EP-A1- 1 413 608
- EP-A2- 0 273 390
- EP-A2- 0 507 633
- EP-A2- 0 551 568
- WO-A2-02/20672
- JP-A- 11 100 419
- JP-A- 2001 084 570
- JP-A- 2001 106 971

## Beschreibung

### Gebiet der Erfindung

Die vorliegende Erfindung betrifft neue, physikalisch, thermisch oder thermisch und mit aktinischer Strahlung härtbare, wässerige Gemische. Außerdem betrifft die vorliegende Erfindung ein neues Verfahren zur Herstellung von physikalisch, thermisch oder thermisch und mit aktinischer Strahlung härtbaren, wässrigen Gemischen. Des Weiteren betrifft die vorliegende Erfindung die Verwendung der neuen, physikalisch, thermisch oder thermisch und mit aktinischer Strahlung härtbaren, wässrigen Gemische und der nach dem neuen Verfahren hergestellten, physikalisch, thermisch oder thermisch und mit aktinischer Strahlung härtbaren, wässrigen Gemische.

### Stand der Technik

Bekanntermaßen wird Tris(2-butoxylethyl)phosphat (nachstehend der Kürze halber als »TBEP« bezeichnet) als Weichmacher für synthetische Kautschuke verwendet (vgl. Römpp Online 2005, »Weichmacher«).

TBEP und Tris(2-hexoxyethyl)phosphat (nachstehend der Kürze halber als »THEP« bezeichnet) werden als Entschäumer, Dispergierhilfsmittel, Einfrier-Auftau-Stabilisatoren, Verlaufsmitteln und Mittel zur Verhinderung von zu raschem Auftrocknen in Latex-Anstrichstoffen auf der Basis von Acryl-, Polyvinylacetat-, Vinylacryl-, Vinylethylen-, Styrol-Butadien-Copolymer- und Polyvinylchloridacryl-Latices verwendet (vgl. die deutsche Offenlegungsschrift DE 1794245).

Aus dem deutschen Patent DE 100 43 405 C1 ist ein thermisch härtbarer Wasserbasislack oder Unidecklack bekannt, der mindestens ein gesättigtes, ungesättigtes und/oder mit olefinisch ungesättigten Verbindungen gepfropftes, ionisch und/oder nichtionisch stabilisiertes Polyurethan als Bindemittel, mindestens ein farb- und/oder effektgebendes Pigment sowie mindestens ein Trioorganophosphat wie Tributylphosphat enthält. Die Trioorganophosphate dienen der Einstellung der Wasserdampfpermeabilität der aus den bekannten Wasserbasislacken oder Unidecklacken hergestellten Basislackierungen oder Unideckläckierungen. Ihre Kochergrenze liegt bei einer Trockenschichtdicke von 27 bis 28 µm. Ihre Nadelstichgrenze, d. h. die Trockenschichtdicke, bis zu der keinen Nadelstiche auftreten, muss aber weiter angehoben werden.

Die Schrift EP 1 413 608 A1 beschreibt eine exzellent strahlenhärtbare, wässrige Beschichtungszusammensetzung mit den folgenden Eigenschaften: Sicherheit, Haftung auf Metalloberflächen und Korroslonsbeständigkeit. Sie weist eine gute Haftung nach starker Bearbeitung auf, sowie eine gute Lösemittelbeständigkeit, insbesondere gegenüber hoch polaren Alkoholen.

Die Schrift EP 0507633A2 beschreibt eine härtbare Harzzusammensetzung, enthaltend eine Verbindung, die mindestens ein polymerisierbares Acrylradikal, Methcacrylradikal, Vinylradikal oder Kombinationen davon und außerdem ein organisches Lösemittel, das mindestens 40 Gew.-% eines Alkohols enthält, und eine Verbindung mit mindestens einem fünf-bindigen P, und einen Polymerisations-Initiator enthält Eine gehärtete Oberflächenbeschichtung des Harzes eignet sich für Informationsdatenträger.

### Aufgabe der Erfindung

Der vorliegende Erfindung lag die Aufgabe zugrunde, neue, physikalisch, thermisch oder thermisch und mit aktinischer Strahlung härtbare, wässrige Gemische bereitzustellen, die mindestens ein gesättigtes, ungesättigtes und/oder mit olefinisch ungesättigten Verbindungen gepfropftes, ionisch und/oder nichtionisch stabilisiertes Polyurethan als Bindemittel und mindestens ein farb- und/oder effektgebendes Pigment enthalten.

Die neuen, physikalisch, thermisch oder thermisch und mit aktinischer Strahlung härtbaren, wässrigen Gemische sollen in einfacher Weise sehr gut reproduzierbar herstellbar, lagerstabil, transportierbar und scherstabil sein. Sie sollen sich in einfacher Weise problemlos verarbeiten, insbesondere applizieren, lassen und rasch gehärtet werden können.

Sie sollen sich sehr gut zur Herstellung neuer, farb- und/oder effektgebender, duroplastischer oder thermoplastischer Materialien eignen, die auch bei hohen Schichtdicken frei von Materialstörungen, insbesondere frei von Kochern und Nadelstichen, sind.

Insbesondere sollen sie sich als neue Beschichtungsstoffe, Klebstoffe und Dichtungsmassen sowie Vorstufen von Formteilen und Folien, speziell als neue Beschichtungsstoffe, zur Herstellung von neuen farb- und/oder effektgebenden Beschichtungen, Klebschichten und Dichtungen sowie Formteilen und Folien, speziell von neuen farb- und/oder effektgebenden Beschichtungen, eignen.

Die resultierenden neuen, färb- und/oder effektgebenden Beschichtungen, insbesondere die neuen Primer-Lackierungen, Korrosionsschutz-Lackierungen, Füllerlackierungen, Steinschlagschutzgrundierungen, Funktionslackierungen, Basislackierungen und Unidecklackierungen, sollen bei einer hohen Kochergrenze eine hohe Nadelstichgrenze haben.

Dabei sollen die neuen, farb- und/oder effektgebenden Beschichtungen das hervorragende anweridungstechnische Eigenschaftsprofil der bekannten Beschichtungen weiterhin aufweisen, wenn nicht gar übertroffen. Insbesondere sollen sie frei von Hell-Dunkel-Schattierungen (Wolken) sein und einen hervorragenden optischen Gesamteindruck (Appearance) haben.

### Erfindungsgemäße Lösung

Demgemäß wurden die neuen, physikalisch, thermisch oder thermisch und mit aktinischer Strahlung härtbaren, wässrigen Gemische gefunden, die
(A) mindestens ein gesättigtes, ungesättigtes und/oder mit olefinisch ungesättigten Verbindungen gepfropftes, ionisch und/oder nichtionisch stabilisiertes Polyurethan als Bindemittel,
(B) mindestens ein farb- und/oder effektgebendes Pigment und
(C) mindestens einen Phosphorsäureester der allgemeinen Formel I:

   (R¹ORO)₃P=O (I).

   worin die Variablen die vorliegende Bedeutung haben:
   R Alkandiyl-Gruppe mit 2 bis 10 Kohlenstoffatomen und
   R¹ Alkylgruppe mit 2 bis 10 Kohlenstoffatomen;
enthalten und die im Folgenden als »erfindungsgemäße Gemische« bezeichnet werden.

Außerdem wurde das neue Verfahren zur Herstellung der erfindungsgemäßen Gemische gefunden, bei dem man die Bestandteile (A), (B) und (C) in der Gegenwart von Wasser miteinander vermischt und die resultierende Mischung homogenisiert und das im Folgenden als »erfindungsgemäßes Verfahren« bezeichnet wird.

Nicht zuletzt wurde die neue Verwendung der erfindungsgemäßen Gemische und der nach dem erfindungsgemäßen Verfahren hergestellten erfindungsgemäßen Gemische für die Herstellung von neuen, farb- und/oder effektgebenden, duroplastischen und thermoplastischen Materialien gefunden, die im Folgenden als »erfindungsgemäße Verwendung« bezeichnet wird.

Weitere Erfindungsgegenstände gehen aus der Beschreibung hervor.

### Vorteile der Erfindung

Im Hinblick auf den Stand der Technik war es überraschend und für den Fachmann nicht vorhersehbar, dass die Aufgabe, die der vorliegenden Erfindung zugrunde lag, durch die erfindungsgemäßen Gemische, das erfindungsgemäße Verfahren und die erfindungsgemäße Verwendung gelöst werden konnte.

Insbesondere war es überraschend, dass die erfindungsgemäßen Gemische in einfacher Weise sehr gut reproduzierbar herstellbar, lagerstabil, transportierbar und scherstabil waren. Sie ließen sich in einfacher Weise problemlos verarbeiten, insbesondere applizieren, und konnten rasch gehärtet werden.

Sie eigneten sich im Rahmen der erfindungsgemäßen Verwendung hervorragend zur Herstellung neuer, farb- und/oder effektgebender, duroplastischer oder thermoplastischer, insbesondere duroplastischer, Materialien, die auch bei hohen Schichtdicken frei von Materialstörungen, insbesondere frei von Kochern und Nadelstichen, warmen.

Insbesondere eigneten sie sich als erfindungsgemäße Beschichtungsstoffe, Klebstoffe und Dichtungsmassen sowie Vorstufen von Formteile und Folien, speziell als erfindungsgemäße Beschichtungsstoffe, zur Herstellung von neuen farb- und/oder effektgebenden Beschichtungen, Klebschichten und Dichtungen sowie Formteilen und Folien, speziell von neuen farb- und/oder effektgebenden Beschichtungen.

Die resultierenden erfindungsgemäßen Beschichtungen, insbesondere die erfindungsgemäßen Primer-Lackierungen, Kortosionsschutz-Lackierungen Füllerlackierungen, Steinschlagschutzgrundierungen, Funktionslackierungen, Basislackierungen und Unidecklackierungen, hatten bei einer besonders hohen Kochergrenze eine hohe Nadelstichgrenze.

Dabei wiesen die erfindungsgemäßen Beschichtungen das hervorragende anwendungstechnische Eigenschaftsprofil der bekannten Beschichtungen weiterhin auf und übertrafen dieses in vielen Fällen sogar. Insbesondere waren sie frei von Hell-Dunkel-Schattierungen (Wolken) und zeigten einen hervorragenden optischen Gesamteindruck (Appearance).

### Ausführliche Beschreibung der Erfindung

Die erfindungsgemäßen Gemische sind wässrig. Dies bedeutet, dass ihre nachstehend beschriebenen Bestandteile (A), (B) und (C) sowie gegebenenfalls (D) in Wasser gelöst und/oder dispergiert sind.

Die erfindungsgemäßen Gemische können physikalisch härtbar sein.

Im Rahmen der vorliegenden Erfindung bedeutet der Begriff "physikalische Härtung" die Härtung eines Gemischs, insbesondere eines Beschichtungsstoffs, durch Verfilmung durch Lösemittelabgabe aus dem Gemisch, wobei die Verknüpfung innerhalb des resultierenden thermoplastischen Materials, insbesondere der Beschichtung, über Schlaufenbildung der Polymermoleküle der Bindemittel (zu dem Begriff vgl. Römpp Lexikon Lacke und Druckfarben, Georg Thieme Verlag, Stuttgart, New York, 1998, »Bindemittel«, Seiten 73 und 74) erfolgt. Oder aber die Verfilmung erfolgt über die Koaleszenz von Bindemittelteilchen (vgl. Römpp Lexikon Lacke und Druckfarben, Georg Thieme Verlag, Stuttgart, New York, 1998, »Härtung«, Seiten 274 und 275).

Die erfindungsgemäßen Gemische können thermisch härtbar sein.

Die thermische Härtung kann über die so genannte Selbstvemetzung von Bestandteilen der erfindungsgemäßen Gemische erfolgen.

Zur Einstellung dieser Eigenschaft enthalten die erfindungsgemäßen Gemische komplementäre reaktive funktionelle Gruppen, die mit den vorhandenen Hydroxylgruppen und/oder hiervon verschiedenen komplementären reaktiven funktionellen Gruppen thermisch initiierte und aufrechterhaltene Reaktionen eingehen, und/oder autoreaktive funktionelle Gruppen, die "mit sich selbst" reagieren können.

Die thermische Härtung kann aber auch über die so genannte Fremdvemetzung von Bestandteilen der erfindungsgemäßen Gemische erfolgen.

Zur Einstellung dieser Eigenschaft enthalten die erfindungsgemäße Gemische mindestens zwei Bestandteile, die jeweils eine Art von komplementären reaktiven funktionellen Gruppen enthalten, die miteinander thermisch initiierte und aufrechterhaltene Reaktionen eingehen können.

Die erfindungsgemäßen Gemische können thermisch und mit aktinischer Strahlung härtbar sein, was auch als Dual-Cure-Härtung bezeichnet wird.

Um mit aktinischer Strahlung härtbar zu sein, enthalten die erfindungsgemäßen Gemische mit aktinischer Strahlung aktivierbare Bindungen, die durch die Bestrahlung aktiviert werden und mit anderen aktivierten Bindungen ihrer Art Polymerisationsreaktionen und/oder Vernetzungsreaktionen eingehen, die nach radikalischen und/oder ionischen Mechanismen ablaufen.

Unter aktinischer Strahlung ist hier und im Folgenden elektromagnetische Strahlung, wie nahes Infrarot (NIR), sichtbares Licht, UV-Strahlung, Röntgenstrahlung oder Gammastrahlung, insbesondere UV-Strahlung, oder Korpuskularstrahlung, wie Elektronenstrahlung, Betastrahlung, Alphastrahlung, Protonenstrahlung oder Neutronenstrahlung, insbesondere Elektronenstrahlung, zu verstehen.

Insbesondere sind die erfindungsgemäßen Gemische thermisch härtbar, wobei die physikalische Härtung die thermische Härtung unterstützen kann.

Der erfindungswesentliche Bestandteil der erfindungsgemäßen Gemische ist mindestens ein, insbesondere ein, Phosphorsäureester (C) der allgemeinen Formel I:

(R¹ORO)₃P=O (I).

worin die Variablen die vorliegende Bedeutung haben:
- R: Alkandiyl-Gruppe mit 2 bis 10, vorzugsweise 2 bis 7 und insbesondere 2 bis 4 Kohlenstoffatomen und
- R¹: Alkylgruppe mit 2 bis 10, vorzugsweise 2 bis 7 und insbesondere 2 bis 6 Kohlenstoffatomen.

Die Alkandiyl-Gruppe R kann linear oder verzweigt sein. Vorzugsweise ist sie linear.

Die Alkylgruppe R¹ kann linear oder verzweigt sein. Vorzugsweise ist sie linear.

Bevorzugt wird Alkandiyl-Gruppe R aus der Gruppe, bestehend aus Ethylen, Trimethylen, Tetramethylen, Pentamethylen, Hexamethylen, Heptan-1,7-diyl, Octan-1,8-diyl, Nonan-1,9-diyl und Decan-1,10-diyl, besonders bevorzugt aus Ethylen, Trimethylen und Tetramethylen, ausgewählt. Insbesondere ist die Alkandiyl-Gruppe R Ethylen.

Bevorzugt wird die Alkylgruppe R¹ aus der Gruppe, bestehend aus Ethyl, Propyl, n-Butyl, n-Pentyl, n-Hexyl, n-Heptyl, n-Octyl, n-Nonyl und n-Decyl, besonders bevorzugt aus Ethyl, Propyl, n-Butyl, n-Pentyl und n-Hexyl, ausgewählt. Insbesondere ist die Alkylgruppe R¹ n-Butyl.

Ganz besonders bevorzugt werden die Phosphorsäureester (C) aus der Gruppe, bestehend aus Tris(2-butoxyethyl)phosphat (TBEP) und Tris(2-hexoxyethyl)phosphat (THEP) ausgewählt. Insbesondere wird TBEP verwendet.

Der Gehalt der erfindungsgemäßen Gemische an Phosphorsäureester (C) kann breit variieren und daher hervorragend den Erfordernissen des Einzelfalls angepasst werden. Vorzugsweise enthalten die erfindungsgemäßen Gemische den Phosphorsäureester (C) in einer Menge von 0,1 bis 5 Gew.-%" bevorzugt 0,5 bis 4 Gew.-% und insbesondere 1 bis 3 Gew.-%, jeweils bezogen auf das erfindungsgemäße Gemisch.

Der zweite wesentliche Bestandteil der erfindungsgemäßen Gemische ist mindestens ein gesättigtes, ungesättigtes und/oder mit olefinisch ungesättigten Verbindungen gepfropftes, ionisch und/oder nichtionisch stabilisiertes Polyurethan (A), das als Bindemittel (vgl. Römpp Online 2005, Bindemittel«) verwendet wird.

Polyurethane (A) sind üblich und bekannt und werden beispielsweise in den deutschen Patentanmeldungen
- DE 199 14 896 A1, Spalte 4, Zeile 23, bis Spalte 11, Zeile 5, i. V. m. Spalte 1, Zeilen 9 bis 56, und Spalte 19, Zeile 12, bis Spalte 20, Zeile 6,
- DE 44 37 535 A1 Seite 2, Zeile 24, bis Seite 6, Zeile 22, und Seite 7, Zeile 20, bis Seite 8, Zeile 49,
- DE 100 43 405 C1, Spalte 11, Zeile 24, bis Spalte 12, Zeile 11,
- DE 100 04 494 A1, Spalte 5, Zeile 16, bis Spalte 11, Zeile 50, i. V. m. Spalte 1, Zeilen 10 bis 24, und Spalte 18, Zeilen 15 bis 31, und
- DE 40 09 858 A1, Spalte 6, Zeile 17, bis Spalte 10, Zeile 23, und Spalte 16, Zeilen 10 bis 35,
   oder der internationalen Patentanmeldung
- WO 92/15405. Seite 2, Zeile 35, bis Seite 3 Zeile 22, Seite 3, Zeile 33, bis Seite 10, Zeile 33, Seite 14, Zeile 13, bis Seite 15, Zeile 13
im Detail beschrieben.

Der Gehalt der erfindungsgemäßen Gemische an den Polyurethanen (A) kann sehr breit variieren und daher hervorragend den Erfordernissen des Einzelfalls angepasst werden. Vorzugsweise werden die Polyurethane (A) in den Mengen verwendet, wie sie in den vorstehend aufgeführten Patentanmeldungen beschrieben werden. Bevorzugt liegt der Gehalt bei 10 bis 80 Gew.-%, besonders bevorzugt 15 bis 70 Gew.-% und insbesondere 20 bis 60 Gew.%, jeweils bezogen auf den filmbildenden Festkörper des erfindungsgemäßen Gemischs.

Hier und im Folgenden ist unter »filmbildendem Festkörper« die Summe der Bestandteile eines erfindungsgemäßen Gemischs zu verstehen, die die hieraus hergestellten erfindungsgemäßen duroplastischen und thermoplastischen Materialien aufbauen.

Der dritte wesentliche Bestandteil der erfindungsgemäßen Gemische ist mindestens ein farb- und/oder effektgebendes Pigment (B).

Die Anzahl unterschiedlicher farb- und/oder effektgebender Pigmente (B), die in einem erfindungsgemäßen Gemische enthalten sind, kann breit variieren und richtet sich insbesondere nach den optischen Effekten und/oder den Farbtönen, die eingestellt werden sollen.

Beispiele geeigneter farb- und/oder effektgebender Pigmente (B) sind aus den deutschen Patentanmeldungen
- DE 103 06 358 A1, Seite 6, Absätze [0055] bis [0058], oder
- DE "100 04 494 A1, Spalte 11, Zeile 51, bis Spalte 12, Zeile 34,
bekannt.

Der Gehalt der erfindungsgemäßen Gemische an farb- und/oder effektgebenden Pigmenten (B) kann sehr breit variieren. Er richtet sich insbesondere nach der Intensität der optischen Effekte und Farbtöne, die eingestellt werden soll.

Der Fachmann kann die für einen gewünschten optischen Effekt und/oder Farbton geeigneten Pigmente und ihre Mengen aufgrund seines allgemeinen Fachwissens gegebenenfalls unter Zuhilfenahme orientierender farbmetrische Untersuchungen leicht auswählen.

Die erfindungsgemäßen Gemische können noch mindestens einen Zusatzstoff (D) enthalten. Vorzugsweise werden Zusatzstoffe (D) eingesetzt, wie sie auf dem Gebiet der Beschichtungsstoffe üblich und bekannt sind. Bevorzugt werden die Zusatzstoffe (D) aus der Gruppe, bestehend aus von den Bindemitteln (A) verschiedenen Bindemitteln, Vernetzungsmitteln, Neutralisationsmitteln, Katalysatoren für die Vernetzung. Haftvermittlern, Additiven zur Verbesserung der Untergrundbenetzung, Additiven zur Verbesserung der Oberflächenglätte, Mattierungsmitteln, Lichtschutzmitteln, Polymerisationsinhibitoren, Korrosionsinhibitoren, Bioziden, Flammschutzmitteln, Initiatoren für die thermische Vernetzung. Photoinitiatoren, von den Pigmenten (B) verschiedenen, fluoreszierenden, elektrisch leitfähigen und/oder magnetisch abschirmenden Pigmenten und Metallpulvern, organischen und anorganischen, transparenten oder opaken Füllstoffen und Nanopartikeln, organischen Farbstoffen, Rheologiehilfsmitteln, Verlaufsmitteln, Netzmitteln, Emulgatoren, Entschäumern und von den Phosphorsäureestern (C) verschiedenen organischen Lösemitteln, ausgewählt.

Beispiele geeigneter Zusatzstoffe (D) sind aus den deutschen Patentanmeldungen
- DE 103 06 358 A1, Seite 6, Absatz [0059], bis Seite 7, Absatz [0068],
- DE 100 04 494 A1, Spalte 3, Zeile 38, bis Spalte 5, Zeile 9, und Spalte 12, Zeile 35, bis Spalte 15, Zeile 1, und
- DE 199 14 896 A1, wird das der Spalte 11, Zeile 6, bis Spalte 13, Zeile 52, und Spalte 14, Zeile 16, bis Spalte 15, Zeile 63,
bekannt.

Der Gehalt der erfindungsgemäßen Gemische an den Zusatzstoffen (D) kann breit variieren, so dass er optimal an den jeweiligen Verwendungszweck angepasst werden kann. Vorzugsweise werden die Zusatzstoffe (D) in den üblichen und bekannten, wirksamen Mengen verwendet. Diese sind dem Fachmann aufgrund seines allgemeinen Fachwissens geläufig, wobei ihm die Angaben in den vorstehend genannten deutschen Patentanmeldungen als Richtschnur dienen können.

Der in den erfindungsgemäßen Gemischen enthaltene filmbildende Festkörper kann breit variieren und daher den Erfordernissen des jeweiligen Verwendungszwecks hervorragend angepasst werden. Es ist ein ganz besonderer Vorteil der erfindungsgemäßen Gemische, dass sie einen hohen Gehalt an filmbildendem Festkörper aufweisen können. Vorzugsweise liegt der filmbildende Festkörper bei 10 bis 60 Gew.%, bevorzugt 15 bis 50 Gew.-% und insbesondere 15 bis 40 Gew.%, jeweils bezogen auf ein erfindungsgemäßes Gemisch.

Vorzugsweise werden die erfindungsgemäßen Gemische nach dem erfindungsgemäßen Verfahren hergestellt, indem man mindestens ein Bindemittel (A), mindestens ein farbund/oder effektgebendes Pigment (B) und mindestens einen Phosphorsäureester (C) in der Gegenwart von Wasser miteinander vermischt und die resultierende Mischung homogenisiert. Bevorzugt wird noch mindestens ein Zusatzstoff (D) zugesetzt.

Bevorzugt werden dabei die üblichen und bekannten Mischverfahren und Vorrichtungen wie Ultraschallbäder, Rührkessel, Rührwerksmühlen, Extruder, Kneter, Ultraturrax, In-line-Dissolver, statische Mischer, Mikromischer, Zahnkranzdispergatoren, Druckentspannungsdüsen und/oder Microfluidizer gegebenenfalls unter Ausschluss von aktinischer Strahlung, eingesetzf.

Die erfindungsgemäßen Gemische dienen im Rahmen der erfindungsgemäßen Verwendung der Erstellung der erfindungsgemäßen duroplastischen und thermoplastischen, insbesondere duroplastischen, Materialien.

Im Rahmen der erfindungsgemäßen Verwendung dienen die erfindungsgemäßen Gemische vorzugsweise als erfindungsgemäße Beschichtungsstoffe, Klebstoffe und Dichtungsmasse sowie als erfindungsgemäße Vorstufen von Formteilen und Folien, insbesondere Beschichtungsstoffe, der Herstellung von erfindungsgemäßen Beschichtungen, Klebschichten und Dichtungen sowie von Formteilen und Folien, insbesondere Beschichtungen.

Besonders bevorzugt werden die erfindungsgemäßen Beschichtungsstoffe als Primer, Korrosionsschutzlacke, Funktionslacke, Füller oder Grundierungen, Wasserbasistacke und Unidecklacke, insbesondere Wasserbasislacke, zur Herstellung von Primerlackierungen, Korrosionsschutz-Lackierungen, Funktionstackierungen, Füllerlackierungen, Steinschlagschutzgrundierungen, Basislackierungen und Unidecklackierungen verwendet.

Unter Funktionslackierungen sind Beschichtungen zu verstehen, die in der Lage sind, mehrere Funktionen zu übernehmen, wie beispielsweise die Funktionen einer Füllerlackierung und einer Basislackierung.

Die erfindungsgemäßen Lackierungen können einschichtig oder mehrschichtig sein. Ganz besonders bevorzugt sind sie mehrschichtig und können dabei mindestens zwei Lackierungen, insbesondere mindestens eine Elektrotauchlackierung, mindestens eine Füflerlackierung oder Steinschlagschutzgrundierung sowie mindestens eine Basislackierung und mindestens eine Klarlackierung oder mindestens eine Unidecklackierung umfassen. Besonders bevorzugt umfassen die erfindungsgemäßen Mehrschichtlackierungen mindestens eine Basislackierung und mindestens eine Klarlackierung.

Von besonderem Vorteil ist es, die Basislackierung der erfindungsgemäßen Mehrschichtlackierungen aus den erfindungsgemäßen Gemischen herzustellen. Bei den erfindungsgemäßen Basislackierungen handelt es sich demnach um die farb- und/oder effektgebende Schichten der Mehrschichtlackierungen, die wesentlich den optische Gesamteindruck (Appearance) bestimmen.

Die erfindungsgemäßen Basislackierungen weisen überraschenderweise bei einer besonders hohen Kochergrenze eine hohe Nadelstichgrenze auf. Sie sind frei von anderen Lackstörungen wie Wolken, Stippen, Pickel, Krater, Orangenhaut und Risse. Sie haben eine hervorragende Zwischenschichthaftung. Weil die erfindungsgemäßen Wasserbasislacke die farb- und/oder effektgebenden Pigmente (B) ganz besonders gut dispergieren, weisen die erfindungsgemäßen Basislackierungen auch bei einem vergleichsweise niedrigen Pigment-Bindemittel-Verhältnis eine ganz besonders hohe Deckkraft und hervorragende optische Effekte auf, die sich außerdem hervorragend reproduzieren lassen.

Je nach Verwendungszweck werden die erfindungsgemäßen Gemische auf übliche und bekannte temporäre oder permanente Substrate appliziert.

Vorzugsweise werden für die Herstellung von erfindungsgemäßen Folien und Formteilen übliche und bekannte temporäre Substrate verwendet, wie Metall- und Kunststoffbänder oder Hohlkörper aus Metall, Glas, Kunststoff, Holz oder Keramik, die leicht entfernt werden können, ohne dass die erfindungsgemäßen Folien und Formteile beschädigt werden.

Werden die erfindungsgemäßen Gemische für die Herstellung von Beschichtungen, Klebschichten und Dichtungen verwendet, werden permanente Substrate eingesetzt.

Bevorzugt handelt es sich bei den Substraten um
- mit Muskelkraft, Heißluft oder Wind betriebenen Fortbewegungsmittel zu Lande, zu Wasser oder zur Luft, wie Fahrräder, Draisinen, Ruderboote, Segelboote, Heißluftballons, Gasballons oder Segelflugzeuge, sowie Teilen hiervon,
- mit Motorkraft betriebenen Fortbewegungsmittel zu Lande, zu Wasser oder zur Luft, wie Motorräder, Nutzfahrzeuge oder Kraftfahrzeuge, insbesondere PKW, Über- oder Unterwasserschiffe oder Flugzeuge, sowie Teile hiervon,
- stationäre Schwimmkörper, wie Bojen oder Teilen von Hafenanlagen
- Bauwerke im Innen- und Außenbereich,
- Türen, Fenstern und Möbel und
- Glashohlkörper,
- industrielle Kleinteile, wie Schrauben, Mutter, Radkappen oder Felgen,
- Behälter, wie Coils, Container oder Emballagen,
- elektrotechnische Bauteile, wie elektronische Wickelgüter, beispielsweise Spulen,
- optische Bauteile,
- mechanische Bauteile und
- weiße Ware, wie Haushaltsgeräte, Heizkessel und Radiatoren.

Die erfindungsgemäßen Folien und Formteile können ebenfalls als Substrate dienen.

Insbesondere handelt es sich bei den Substraten um Automobilkarosserien und Teile hiervon. Die erfindungsgemäßen Gemische bzw. die hieraus hergestellten erfindungsgemäßen Beschichtungen dienen dabei vorzugsweise der Erstlackierung der Automobilkarosserien (OEM) oder der Reparaturlackierung von erfindungsgemäßen und nicht erfindungsgemäßen Erstlackierungen. Die erfindungsgemäßen Erstlackierungen, insbesondere diejenigen, die eine erfindungsgemäße Basislackierung enthalten, haben eine hervorragende Überlackierbarkeit. Die erfindungsgemäßen Reparaturlackierungen haften hervorragend auf den erfindungsgemäßen und nicht erfindungsgemäßen Erstlackierungen.

Methodisch weist die Applikation der erfindungsgemäßen Gemische keine Besonderheiten auf, sondern kann durch alle üblichen und bekannten, für das jeweilige Gemisch geeigneten Applikationsmethoden, wie z.B. Spritzen, Sprühen, Rakeln, Streichen, Gießen, Tauchen, Träufeln oder Walzen erfolgen. Vorzugsweise werden Spritzappfikationsmethoden angewandt.

Bei der Applikation empfiehlt es sich, unter Ausschluss von aktinischer Strahlung zu arbeiten, wenn die erfindungsgemäßen Gemische zusätzlich mit aktinischer Strahlung härtbar sind.

Für die Herstellung der erfindungsgemäßen Mehrschichtlackierungen können insbesondere Nass-in-nass-Verfahren und Aufbauten angewandt werden, wie sie beispielsweise aus den deutschen Patentanmeldungen
- DE 100 43 405 C1. Spalte 2, Absatz [0009], bis Spalte 3, Absatz [0017], und Spalte 8, Absatz [0052], bis Spalte 9, Absatz [0056],
- DE 199 14 98 A1, Spalte 16, Zeile 54, bis Spalte 18, Zeile 54,
- DE 199 30 067 A 1, Seite 15, Zeile 23, bis Seite 16, Zeile 36, oder
- DE 199 40 855 A1, Spalte 30, Zeile 39, bis Spalte 31, Zeile 48, und Spalte 32, Zeilen 15 bis 29,
bekannt sind.

Es ist ein ganz wesentlicher Vorteil der erfindungsgemäßen Verwendung, dass im Grunde die Primerlackierungen, Korrosionsschutz-Lackierungen, Funktionslackierungen, Fülledackierungen, Steinschlagschutzgrundierungen, Basislackierungen und Unidecklackierungen, insbesondere aber die Basislackierungen, der erfindungsgemäßen Mehrschichtlackierungen aus den erfindungsgemäßen Gemischen hergestellt werden können.

Die Härtung der erfindungsgemäßen Gemische erfolgt im Allgemeinen nach einer gewissen Ruhezeit oder Ablüftzeit. Sie kann eine Dauer von 30 s bis 2 h, vorzugsweise 1 min bis 1 h und insbesondere 1 bis 45 min haben. Die Ruhezeit dient beispielsweise zum Verlauf und zur Entgasung der applizierten erfindungsgemäßen Gemische und zum Verdunsten von flüchtigen Bestandteilen wie gegebenenfalls vorhandenem Lösemittel. Die Ablüftung kann durch eine erhöhte Temperatur, die zu einer Härtung noch nicht ausreicht, und/oder durch eine reduzierte Luftfeuchtigkeit beschleunigt werden.

Die thermische Härtung der applizierten erfindungsgemäßen Gemische erfolgt beispielsweise mit Hilfe eines gasförmigen, flüssigen und/oder festen, heißen Mediums, wie heiße Luft, erhitztes Öl oder erhitzte Walzen, oder von Mikrowellenstrahlung, Infrarotlicht und/oder nahem Infrarotlicht (NIR). Vorzugsweise erfolgt das Erhitzen in einem Umluftofen oder durch Bestrahlen mit IR- und/oder NIR-Lampen. Wie bei der Härtung mit aktinischer Strahlung kann auch die thermische Härtung stufenweise erfolgen. Vorteilhafterweise erfolgt die thermische Härtung bei Temperaturen von Raumtemperatur bis 200°C.

Die thermische Härtung der erfindungsgemäßen Gemische kann auch unter weitgehendem oder vollständigem Ausschluss von Sauerstoff durchgeführt werden.

Im Rahmen der vorliegenden Erfindung gilt der Sauerstoff als weitgehend ausgeschlossen, wenn seine Konzentration an der Oberfläche der applizierten erfindungsgemäßen Gemische < 21 Vol.-%, vorzugsweise < 18 Vol.%, bevorzugt < 16 Vol.%, besonders bevorzugt < 14 Vol.-%, ganz besonders bevorzugt < 10 Vol.-% und insbesondere < 6 Vol.-% beträgt.

Im Rahmen der vorliegenden Erfindung gilt der Sauerstoff als vollständig ausgeschlossen, wenn seine Konzentration an der Oberfläche unter der Nachweisgrenze der üblichen und bekannten Nachweismethoden liegt.

Bevorzugt ist die Konzentration des Sauerstoffs ≥ 0,001 Vol.%, besonders bevorzugt ≥ 0,01 Vol.-%, ganz besonders bevorzugt ≥ 0,1 Vol.-% und insbesondere ≥ 0,5 Vol.-%.

Die gewünschten Konzentrationen des Sauerstoffs können durch die in dem deutschen Patent DE 101 30 972 C1, Seite 6, Absätze [0047] bis [0052], beschriebenen Maßnahmen oder durch das Auflegen von Folien eingestellt werden.

Die Härtung mit aktinischer Strahlung kann mit Hilfe der üblichen und bekannten Vorrichtungen und Verfahren, wie sie beispielsweise in der deutschen Patentanmeldung DE 198 18 735 A 1, Spalte 10, Zeilen 31 bis 61, der deutschen Patentanmeldung DE 102 02 565 A1, Seite 9, Absatz [0092], bis Seite 10, Absatz [0106], der deutschen Patentanmeldung DE 103 16 890 A1, Seite 17, Absätze [0128] bis [0130], in der internationalen Patentanmeldung WO 94/11123, Seite 2, Zeile 35, bis Seite 3, Zeile 6, Seite 3, Zeilen 10 bis 15, und Seite 8, Zeilen 1 bis 14, oder dem amerikanischen Patent US 6,743,466 B2, Spalte 6, Zeile 53, bis Spalte 7, Zeile 14, beschrieben werden, durchgeführt werden.

Die erfindungsgemäßen duroplastischen und thermoplastischen, insbesondere duroplastischen, Materialien, insbesondere die erfindungsgemäßen Folien, Formteile, Beschichtungen, Klebschichten und Dichtungen eignen sich hervorragend für das Beschichten, Verkleben, Abdichten, Umhüllen und Verpacken der vorstehend beschriebenen Substrate.

Die resultierenden erfindungsgemäßen Substrate, die mit erfindungsgemäßen Beschichtungen beschichtet, mit erfindungsgemäßen Klebschichten verklebt, mit erfindungsgemäßen Dichtungen abgedichtet und/oder mit erfindungsgemäßen Folien und/oder Formteilen umhüllt oder verpackt sind, weisen hervorragende Gebrauchseigenschaften verbunden mit einer besonders langen Gebrauchsdauer auf.

### Beispiel und Vergleichsversuch

### Vergleichsversuch

### Die Herstellung des Wasserbasislacks V1 und der Mehrschichtlackierung V1

Beispiel 1 des deutschen Patents DE 100 43 405 C1, Spalte 12, Zeile 57, bis Spalte 13, Zeile 1; i. V. m. Spalte 11, Zeile 26, bis Spalte 12, Zeile 31, wurde wiederholt. Der betreffende Wasserbasislack V1 enthielt Tributylphosphat. Die visuelle Auswertung der keilförmig aufgetragenen Basislackierung V1 ergab eine Nadelstichgrenze von 20 µm und eine Kochergrenze von 26 µm.

### Beispiel

### Die Herstellung des Wasserbasislacks 1 und der Mehrschichtlackierung 1

Der Vergleichsversuch wurde wiederholt, nur dass an Stelle von Tributylphosphat die gleiche Mengen TBEP verwendet wurde. Die visuelle Auswertung der keilförmig aufgetragenen Basislackierung 1 ergab eine Nadelstichgrenze von 23 µm und eine Kochergrenze von 43 µm. Ansonsten wiesen die Mehrschichtlackierung 1 dieselben vorteilhaften Eigenschaften wie die Mehrschichtlackierung 1 auf.

Die Ergebnisse untermauern, dass TBEP die Nadelstichgrenze und insbesondere die Kochergrenze signifikant zu erhöhen vermag, ohne dass dies zu einer Verschlechterung der sonstigen wesentlichen anwendungstechnischen Eigenschaften führt.

## Patentansprüche

1. Physikalisch, thermisch oder thermisch und mit aktinischer Strahlung härtbare, wässrige Gemische, enthaltend
(A) mindestens ein gesättigtes, ungesättigtes und/oder mit olefinisch ungesättigten Verbindungen gepfropftes, ionisch und/oder nichtionisch stabilisiertes Polyurethan als Bindemittel,
(B) mindestens ein farb- und/oder effektgebendes Pigment und
(C) mindestens einen Phosphorsäureester der allgemeinen Formel I:
(R¹ORO)₃P=O (I),
worin die Variablen die vorliegende Bedeutung haben:
R Alkandiyl-Gruppe mit 2 bis 10 Kohlenstoffatomen und
R¹ Alkylgruppe mit 2 bis 10 Kohlenstoffatomen.

2. Gemische nach Anspruch 1, **dadurch gekennzeichnet, dass** die Alkandiyl-Gruppe R aus der Gruppe, bestehend aus Ethylen, Trimethylen, Tetramethylen, Pentamethylen, Hexamethylen, Heptan-1,7-diyl, Octan-1,8-diyl, Nonan-1,9-diyl und Decan-1,10-diyl, ausgewählt ist.

3. Gemische nach Anspruch 2, **dadurch gekennzeichnet, dass** die Alkandiyl-Gruppe R aus der Gruppe, bestehend aus Ethylen, Trimethylen und Tetramethylen, ausgewählt ist

4. Gemische nach Anspruch 3, **dadurch gekennzeichnet, dass** die Alkandiyl-Gruppe R Ethylen ist.

5. Gemische nach einem der Ansprüche 1 bis 4, **dadurch gekennzeichnet, dass** die Alkylgruppe R¹ aus der Gruppe, bestehend aus Ethyl, Propyl, n-Butyl, n-Pentyl, n-Hexyl, n-Heptyl, n-Octyl, n-Nonyl und n-Decyl, ausgewählt ist.

6. Gemische nach Anspruch 5, **dadurch gekennzeichnet, dass** die Alkylgruppe R¹ aus der Gruppe, bestehend aus Ethyl, Propyl, n-Butyl, n-Pentyl und n-Hexyl, ausgewählt ist.

7. Gemische nach Anspruch 6, **dadurch gekennzeichnet, dass** die Alkylgruppe R¹ n-Butyl ist.

8. Gemische nach Anspruch 4 oder 7, **dadurch gekennzeichnet, dass** der Phosphorsäureester (C) Tris(2-butoxyethyl)phosphat TBEP ist.

9. Gemische nach einem der Ansprüche 1 bis 8, **dadurch gekennzeichnet, dass** sie den Phosphorsäureester (C) in einer Menge von 0,1 bis 5 Gew.%, bezogen auf das Gemisch, enthalten.

10. Gemische nach einem der Ansprüche 1 bis 9, **dadurch gekennzeichnet, dass** die mindestens einen Zusatzstoff (D) enthalten.

11. Gemische nach Anspruch 10, **dadurch gekennzeichnet, dass** der Zusatzstoff (D) aus der Gruppe, bestehend aus von den Bindemitteln (A) verschiedenen Bindemitteln, Vernetzungsmitteln. Neutralisationsmitteln, Katalysatoren für die Vernetzung, Haftvermittlern, Additiven zur Verbesserung der Untergrundbenetzung, Additiven zur Verbesserung der Oberflächenglätte, Mattierungsmitteln, Lichtschutzmitteln, Polymerisationsinhibitoren, Korrosionsinhibitoren, Bioziden, Flammschutzmitteln, Initiatoren für die thermische Vernetzung. Photoinitiatoren, von den Pigmenten (B) verschiedenen, fluoreszierenden, elektrisch leitfähigen und/oder magnetisch abschirmenden Pigmenten und Metallpulvem, organischen und anorganischen, transparenten oder opaken Füllstoffen und Nanopartikeln, organischen Farbstoffen, Rheologiehilfsmitteln, Verlaufsmitteln, Netzmitteln, Emulgatoren, Entschäumern und von den Phosphorsäureestern (C) verschiedenen organischen Lösemitteln, ausgewählt ist.

12. Verfahren zur Herstellung von physikalisch, thermisch oder thermisch und mit aktinischer Strahlung härtbaren, wässrigen Gemischen gemäß einem der Ansprüche 1 bis 11, **dadurch gekennzeichnet, dass** man mindestens ein Bindemittel (A), mindestens ein farb- und/oder effektgebendes Pigment (B) und mindestens einen Phosphorsäureester (C) in der Gegenwart von Wasser miteinander vermischt und die resultierende Mischung homogenisiert.

13. Verfahren nach Anspruch 12, **dadurch gekennzeichnet, dass** man mindestens einen Zusatzstoff (D) zusetzt.

14. Verwendung der physikalisch, thermisch oder thermisch und mit aktinischer Strahlung härtbaren, wässrigen Gemische gemäß einem der Ansprüche 1 bis 11 und der nach dem Verfahren gemäß Anspruch 12 oder 13 hergestellten, physikalisch, thermisch oder thermisch und mit aktinischer Strahlung härtbaren, wässrigen Gemische zur Herstellung farb- und/oder effektgebender duroplastischer oder thermoplastischer Materialien.

15. Verwendung nach Anspruch 14, **dadurch gekennzeichnet, dass** die farb- und/oder effektgebenden duroplastischen oder thermoplastischen Materialien Beschichtungen, Klebschichten und Dichtungen sowie Formteilen und Folien sind.

16. Verwendung nach Anspruch 15, **dadurch gekennzeichnet, dass** die Beschichtungsstoffe als Primer, Grundierungen, Füller, Basislacke, Unidecklacke und Klarlacke zur Herstellung ein- oder mehrschichtiger Primer-Lackierungen, Korrosionsschutz-Lackierungen, Steinschlagschutzgrundierungen, Füllerlackierungen, Funktionslackierungen, Basislackierungen und Unidecklackierungen verwendet werden.

17. Verwendung nach Anspruch 16, **dadurch gekennzeichnet, dass** die Basislacke der Herstellung ein- oder mehrschichtiger Basislackierungen im Rahmen farb- und/oder effektgebender Mehrschichtlackierungen dienen.

18. Verwendung nach Anspruch 17, **dadurch gekennzeichnet, dass** die farb- und/oder effektgebenden Mehrschichtlackierungen mit Hilfe von Nass-in-nass-Verfahren hergestellt werden.

## Claims

1. Aqueous mixtures curable physically, thermally or both thermally and with actinic radiation, comprising
(A) at least one ionically and/or nonionically stabilized polyurethane binder which is saturated, unsaturated and/or grafted with olefinically unsaturated compounds,
(B) at least one color and/or effect pigment, and
(C) at least one phosphoric ester of the general formula I:
(R¹ORO)₃P=O (I),
in which the variables are defined as follows:
R: alkanediyl group having 2 to 10 carbon atoms and
R¹: alkyl group having 2 to 10 carbon atoms.

2. Mixtures according to Claim 1, **characterized in that** the alkanediyl group R is selected from the group consisting of ethylene, trimethylene, tetramethylene, pentamethylene, hexamethylene, heptane-1,7-diyl, octane-1,8-diyl, nonane-1,9-diyl and decane-1,10-diyl.

3. Mixtures according to Claim 2, **characterized in that** the alkanediyl group R is selected from the group consisting of ethylene, trimethylene and tetramethylene.

4. Mixtures according to Claim 3, **characterized in that** the alkanediyl group R is ethylene.

5. Mixtures according to any one of Claims 1 to 4, **characterized in that** the alkyl group R¹ is selected from the group consisting of ethyl, propel, n-butyl, n-pentyl, n-hexyl, n-heptyl, n-octyl, n-nonyl and n-decyl.

6. Mixtures according to Claim 5, **characterized in that** the alkyl group R¹ is selected from the group consisting of ethyl, propyl, n-butyl, n-pentyl and n-hexyl.

7. Mixtures according to Claim 6, **characterized in that** the alkyl group R¹ is n-butyl.

8. Mixtures according to Claim 4 or 7, **characterized in that** the phosphoric ester (C) is tris(2-butoxyethyl) phosphate, TBEP.

9. Mixtures according to any one of Claims 1 to 8, **characterized in that** they comprise the phosphoric ester (C) in an amount of 0.1% to 5% by weight, based on the mixture.

10. Mixtures according to any one of Claims 1 to 9, **characterized in that** they comprise at least one additive (D).

11. Mixtures according to Claim 10, **characterized in that** the additive (D) is selected from the group consisting of binders other than the binders (A), crosslinking agents, neutralizing agents, crosslinking catalysts, adhesion promoters, additives for enhancing substrate wetting, additives for enhancing surface smoothness, matting agents, light stabilizers, polymerization inhibitors, corrosion inhibitors, biocides, flame retardants, thermal crosslinking initiators, photoinitiators, fluorescent, electrically conductive and/or magnetically shielding pigments other than the pigments (B), and metal powders, organic and inorganic, transparent or opaque fillers and nanoparticles, organic dyes, rheological assistants, flow control agents, wetting agents, emulsifiers, defoamers, and organic solvents other than the phosphoric esters (C).

12. Process for preparing aqueous mixtures curable physically, thermally or both thermally and with actinic radiation, according to any one of Claims 1 to 11, **characterized in that** at least one binder (A), at least one color and/or effect pigment (B), and at least one phosphoric ester (C) are mixed with one another in the presence of water and the resulting mixture is homogenized.

13. Process according to Claim 12, **characterized in that** at least one additive (D) is added.

14. Use of the aqueous mixtures curable physically, thermally or both thermally and with actinic radiation, according to any one of Claims 1 to 11, and of the aqueous mixtures prepared by the process according to Claim 12 or 13 and curable physically, thermally or both thermally and with actinic radiation for producing color and/or effect thermoset or thermoplastic materials.

15. Use according to Claim 14, **characterized in that** the color and/or effect thermoset or thermoplastic materials are coatings, adhesive layers, seals, moldings and sheets.

16. Use according to Claim 15, **characterized in that** the coating materials are used as primers, priming paints, surfacers, basecoat materials, solid-color topcoat materials and clearcoat materials for producing single-coat or multicoat primer coats, corrosion control coats, antistonechip priming coats, surfacer coats, functional coats, basecoats and solid-color topcoats.

17. Use according to Claim 16, **characterized in that** the basecoat materials serve for producing single-coat or multicoat basecoats as part of multicoat color and/or effect paint systems.

18. Use according to Claim 17, **characterized in that** the multicoat color and/or effect paint systems are produced with the aid of wet-on-wet methods.

## Revendications

1. Mélanges aqueux durcissables physiquement, thermiquement ou thermiquement et avec un rayonnement actinique, contenant :
(A) au moins un polyuréthane saturé, insaturé et/ou greffé avec des composés oléfiniquement insaturés, stabilisé ioniquement et/ou non ioniquement, en tant que liant,
(B) au moins un pigment colorant et/ou à effet et
(C) au moins un ester de l'acide phosphorique de formule générale I :
(R¹ORO)₃P=O (I)
dans laquelle les variables ont la signification suivante :
R groupe alcanediyle contenant 2 à 10 atomes de carbone et
R¹ groupe alkyle contenant 2 à 10 atomes de carbone.

2. Mélanges selon la revendication 1, **caractérisés en ce que** le groupe alcanediyle R est choisi dans le groupe constitué par éthylène, triméthylène, tétraméthylène, pentaméthylène, hexaméthylène, heptane-1,7-diyle, octane-1,8-diyle, nonane-1,9-diyle et décane-1,10-diyle.

3. Mélanges selon la revendication 2, **caractérisés en ce que** le groupe alcanediyle R est choisi dans le groupe constitué par éthylène, triméthylène et tétraméthylène.

4. Mélanges selon la revendication 3, **caractérisés en ce que** le groupe alcanediyle R est l'éthylène.

5. Mélanges selon l'une quelconque des revendications 1 à 4, **caractérisés en ce que** le groupe alkyle R¹ est choisi dans le groupe constitué par éthyle, propyle, n-butyle, n-pentyle, n-hexyle, n-heptyle, n-octyle, n-nonyle et n-décyle.

6. Mélanges selon la revendication 5, **caractérisés en ce que** le groupe alkyle R¹ est choisi dans le groupe constitué par éthyle, propyle, n-butyle, n-pentyle et n-hexyle.

7. Mélanges selon la revendication 6, **caractérisés en ce que** le groupe alkyle R¹ est le n-butyle.

8. Mélanges selon la revendication 4 ou 7, **caractérisés en ce que** l'ester de l'acide phosphorique (C) est le phosphate de tris(2-butoxyéthyle) TBEP.

9. Mélanges selon l'une quelconque des revendications 1 à 8, **caractérisés en ce qu'**ils contiennent l'ester de l'acide phosphorique (C) en une quantité de 0,1 à 5 % en poids, par rapport au mélange.

10. Mélanges selon l'une quelconque des revendications 1 à 9, **caractérisés en ce qu'**ils contiennent au moins un additif (D).

11. Mélanges selon la revendication 10, **caractérisés en ce que** l'additif (D) est choisi dans le groupe constitué par les liants différents des liants (A), les agent de réticulation, les agents de neutralisation, les catalyseurs pour la réticulation, les promoteurs d'adhésion, les additifs pour l'amélioration du mouillage du substrat, les additifs pour l'amélioration du lissé de surface, les agents matants, les agents photoprotecteurs, les inhibiteurs de polymérisation, les inhibiteurs de corrosion, les biocides, les agents ignifuges, les initiateurs de réticulation thermique, les photoinitiateurs, les pigments fluorescents, électriquement conducteurs et/ou écrans magnétiques différents des pigments (B) et les poudres métalliques, les charges et les nanoparticules organiques et inorganiques, transparentes ou opaques, les colorants organiques, les adjuvants de rhéologie, les agents d'écoulement, les agents mouillants, les émulsifiants, les antimousses et les solvants organiques différents des esters de l'acide phosphorique (C).

12. Procédé de fabrication de mélanges aqueux durcissables physiquement, thermiquement ou thermiquement et avec un rayonnement actinique selon l'une quelconque des revendications 1 à 11, **caractérisé en ce qu'**au moins un liant (A), au moins un pigment colorant et/ou à effet (B) et au moins un ester de l'acide phosphorique (C) sont mélangés les uns avec les autres en présence d'eau et le mélange résultant est homogénéisé.

13. Procédé selon la revendication 12, **caractérisé en ce qu'**au moins un additif (D) est ajouté.

14. Utilisation des mélanges aqueux durcissables physiquement, thermiquement ou thermiquement et avec un rayonnement actinique selon l'une quelconque des revendications 1 à 11 et des mélanges aqueux durcissables physiquement, thermiquement ou thermiquement et avec un rayonnement actinique fabriqués par le procédé selon la revendication 12 ou 13 pour la fabrication de matériaux duroplastiques ou thermoplastiques colorants et/ou à effet.

15. Utilisation selon la revendication 14, **caractérisée en ce que** les matériaux duroplastiques ou thermoplastiques colorants et/ou à effet sont des revêtements, des couches adhésives et des joints, ainsi que des pièces moulées et des feuilles.

16. Utilisation selon la revendication 15, **caractérisée en ce que** les matériaux de revêtement sont utilisés en tant qu'amorces, couches de base, charges, laques de base, laques de finition unies et laques transparentes pour la fabrication de laquages d'amorce, de laquages anticorrosion, de couches de base contre les chutes de pierres, de laquages de remplissage, de laquages fonctionnels, de laquages de base et de laquages de finition unis mono- ou multicouches.

17. Utilisation selon la revendication 16, **caractérisée en ce que** les laques de base servent à la fabrication de laquages de base mono- ou multicouches dans le cadre de laquages multicouches colorants et/ou à effet.

18. Utilisation selon la revendication 17, **caractérisée en ce que** les laquages multicouches colorants et/ou à effet sont fabriqués à l'aide de procédés humides.
